## Europäisches Patentamt

## European Patent Office

## Office européen des brevets

(19)

(11) Veröffentlichungsnummer: **0 167 940**

**B1**

(12) **EUROPÄISCHE PATENTSCHRIFT**

(45) Veröffentlichungstag der Patentschrift:
**04.10.89**

(21) Anmeldenummer: **85108016.8**

(22) Anmeldetag: **28.06.85**

(51) Int. Cl.⁴: **G 05 D 11/13,** B 01 F 15/04,
C 08 J 9/30

(54) **Verfahren und Vorrichtung zur Steuerung der Dichte eines aus einem flüssigen und einem gasförmigen Stoff zusammengesetzen Ausgangsprodukts.**

(30) Priorität: **11.07.84 DE 3425470**

(43) Veröffentlichungstag der Anmeldung:
**15.01.86 Patentblatt 86/3**

(45) Bekanntmachung des Hinweises auf die Patenterteilung:
**04.10.89 Patentblatt 89/40**

(84) Benannte Vertragsstaaten:
**FR GB IT NL**

(56) Entgegenhaltungen:
**EP-A-0 011 885**
**EP-A-0 025 844**
**EP-A-0 110 244**
**US-A-4 154 537**

(73) Patentinhaber: **LABORATORIUM PROF. DR. RUDOLF BERTHOLD, Calmbacher Strasse 22, D-7547 Wildbad 1 (DE)**

(72) Erfinder: **Kappler, Gerhard Wilhelm, Johannes-Kepler- Strasse 53, D-7263 Bad Liebenzell- 3 (DE)**

(74) Vertreter: **Frank, Gerhard, Dipl.- Phys., Patentanwälte Dr. F. Mayer & G. Frank Westliche 24, D-7530 Pforzheim (DE)**

LIBER, STOCKHOLM 1989

EP 0 167 940 B1

## Beschreibung

Die Erfindung betrifft zunächst ein Verfahren zur Steuerung der Dichte eines aus einem flüssigen und einem gasförmigen Stoff in einem Mischer zusammengesetzten Ausgangsprodukt, wobei in der Förderleitung des Ausgangsproduktes dessen Dichte gemessen wird, der Meßwert (Ist-Dichte) mit einem vorgegebenen Dichtewert (Sollwert) verglichen wird und bei Abweichungen die Zufuhrmenge des gasförmigen Stoffes nachgeregelt wird.

Ein solches Verfahren ist aus der US-PS-4 154 537 bekannt. Die dort beschriebene Vorrichtung dient zur Vermischung insbesondere von Backzutaten, wie zum Beispiel Milch, Wasser, flüssiges Fett mit Luft zur Teigerzeugung.

Mischungen aus zwei flüssigen Ausgangsstoffen werden auch hergestellt bei einem Verfahren gemäß der EP-A-0 025 844, wo es beispielsweise um die Herstellung eines einen Schaumstoff bildenden Reaktionsgemisches geht, insbesondere um ein schäumfähiges Polyurethan-Reaktionsgemisch, die hierfür verwendeten Stoffe sind flüssig, beispielsweise Polyol und Isocyanat.

Zur Erzielung eines guten Endproduktes werden an diesen beiden Flüssigkeiten vor der Zugabe zum Mischer mehrere Messungen vorgenommen, insbesondere wird an mindestens einer Komponente die Dichte mittels eines radiometrischen Meßgerätes unter Hochdruck und unter Niederdruck ermittelt und der Volumenstrom mittels eines Zählers gemessen. Aus der Hochdruck- und der Niederdrucksmessung wird dann mittels eines Rechners eine Verstellvorrichtung der der jeweiligen Flüssigkeit zugeordneten Gasbeladungsvorrichtung angesteuert, wodurch die Gasbeladung einem vorgegebenen Sollwert nachgeregelt werden kann.

Für die Anwendung bei einem gattungsgemäßen Verfahren, wo einer der Ausgangsstoffe gasförmig ist, ist dieses vorbekannte Verfahren unnötig aufwendig.

Bei den aufgeschäumten Produkten, mit deren Herstellung sich das erfindungsgemäße Verfahren befaßt, kann es sich beispielsweise um Lebensmittel wie Sahne oder aber auch Farbflotten, beispielsweise zum Einfärben von Textilien, handeln. Bei der Aufschäumung von Produkten dieser Art ist es wichtig, das Litergewicht des aufgeschäumten Stoffes und damit die freie Schaumdichte möglichst konstant zu halten. Dies ist bei den ersten beiden Beispielen wünschenswert, um eine einwandfreie Füllung der Packung mit der vorgeschriebenen Produktmenge zu erreichen, beim anderen Beispiel zur gleichmäßigen Einfärbung der Textilien. Hierbei ist zu beachten, daß die Dichte des erzeugten Schaumes in der Förderleitung nicht identisch ist mit der Dichte des Schaumes bei atmosphärischem Druck bei dessen Austritt aus der Förderleitung (freie Schaumdichte), so daß eine Anordnung gemäß der US-PS-4 154 537, die für die Verarbeitung von anderen Produkten geschaffen ist, bei den oben angeführten aufgeschäumten Produkten nicht ausreicht, um einen vorgegebenen Wert der Dichte des Schaumes nach dessen Austritt aus der Förderleitung sicherzustellen.

Es ist daher Aufgabe der Erfindung, das vorbekannte Verfahren und die vorbekannte Vorrichtung gemäß der US-PS-4 154 537 möglichst einfach so weiterzubilden, daß das Litergewicht (die freie Schaumdichte) von aufgeschäumten Produkten, die aus einem flüssigen und einem gasförmigen Stoff zusammengesetzt sind, mit hoher Genauigkeit konstant gehalten werden kann.

Diese Aufgabe wird gemäß dem kennzeichnenden Teil des Patentanspruchs 1 gelöst.

Der Grundgedanke der Erfindung besteht also darin, durch eine gekoppelte Messung der Schaumdichte innerhalb der Förderleitung und des Druckes in der Förderleitung durch eine spezifische Verknüpfung dieser Meßgrößen die freie Schaumdichte zu bestimmen und diesen Ist-Wert durch Regelung des Gaszusatzes dem vorgegebenen Soll-Wert der freien Schaumdichte nachzuführen.

Zu diesem Zweck sind bei der erfindungsgemäßen Vorrichtung zur Durchführung dieses Verfahrens eine radiometrische Dichtemeßanlage und ein Druckmeßgerät in unmittelbarer Nachbarschaft in der Schaumförderleitung zwischengeschaltet, die über eine nachgeschaltete Auswerteschaltung und einen Regler das Regelventil der Gasleitung ansteuern.

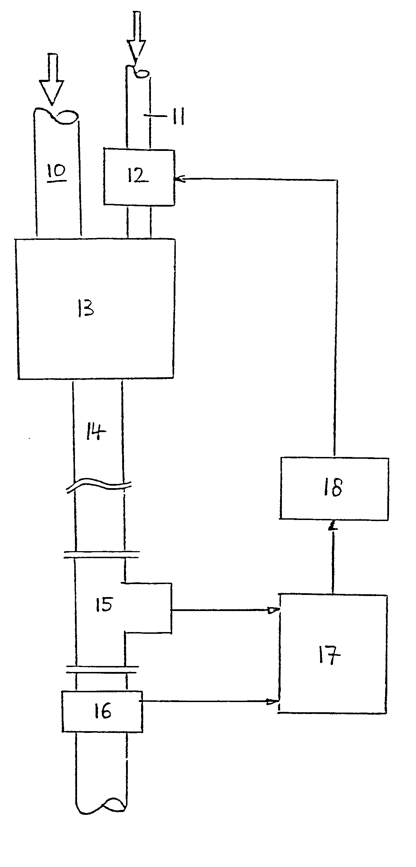

Ein Ausführungsbeispiel der Erfindung wird an Hand der Zeichnung näher erläutert:

In einer Flüssigkeitsleitung 10 wird die aufzuschäumende Flüssigkeit einem Mischer 13 zugeführt, an dessen zweitem Mischeingang eine Gasleitung 11 endet. In Abhängigkeit von der Förderleistung der (nicht dargestellten) Förderpumpe in der Flüssigkeitsleitung kann mittels eines Regelventils 12 in der Gasleitung 11 die geförderte Gasmenge auf die geförderte Flüssigkeitsmenge abgestimmt werden, so daß ein bestimmtes Verhältnis dieser beiden Schaumkomponenten im Mischer 13 eingestellt werden kann.

In diesem Verhältnis gemischt, verläßt der Schaum mit einem bestimmten Überdruck $p_{\ddot{u}}$ den Mischer 13 über eine Schamförderleitung 14.

Erfindungsgemäß ist nun vorgesehen, daß in der Schaumförderleitung 14 eine Dichtemeßanlage 15 und unmittelbar daneben ein Druckmeßgerät 16 installiert sind, die die Dichte $p_S$ und den Überdruck $p_{\ddot{u}}$ im Bereich der Dichtemeßstelle messen. Unter der Voraussetzung, daß die Dichte des Ausgangsprodukts (Flüssigkeitsdichte) als konstanter Wert angenommen werden kann, läßt sich aus den gemessenen Werten $p_S$ und $p_{\ddot{u}}$ die freie Schaumdichte $p_L$ des Schaumes, also die Schaumdichte unter atmosphärischem Druck, wie folgt näherungsweise angeben:

$$p_L^* = [1 - \frac{p_F - p_S}{p_F - p_S + p_S(p_{\ddot{u}} + 1)}] \cdot p_F$$

($p_{\ddot{u}}$ in Bar gemessen)

Auf Grund dieses physikalischen Zusammenhangs läßt sich in einer nachgeschalteten Auswerteschaltung 17 (nach Eingabe der Flüssigkeitsdichte $\rho_F$) unter Verwertung der beiden Meßwerte $\rho_S$ und $p_{ü}$ die freie Schaumdichte $\rho_L$ berechnen, ohne daß dazu Probeentnahmen erforderlich sind. Als Auswerteschaltung kann ein Mikroprozessor dienen, der die anstehenden beiden Meßwerte taktweise abfragt und mittels der einprogrammierten oben abgegebenen Gleichung die freie Schaumdichte berechnet. Dieses Rechenergebnis stellt dann den Ist-Wert der freien Schaumdichte dar. Es bereitet dann keine Schwierigkeiten, diesen Ist-Wert durch ein geeignetes Mikroprozessor-Program taktweise mit dem vorgegebenen Soll-Wert der freien Schaumdichte zu vergleichen und bei Abweichungen einen Regler 16 anzusteuern, der seinerseits das Regelventil 12 der Gasförderleitung 11 verstellt.

**Ausführungsbeispiel:**

Eine Anlage, bei der das aufgeschäumte Produkt eine Farbflotte ist, arbeitet mit einer Fördermenge von ca. 600 l/h und einer freien Schaumdichte $\rho_L$ von 50 - 180 g/l. Als Dichtemeßanlage dient eine radiometrische Meßanlage LB 379 der Firma Laboratorium Prof. Dr. Berthold in 7547 Wildbad, als Auswerteschaltung 17 wird der Meßverstärker dieser Dichtemeßanlage LB 379 derart verwendet, daß der an sich zur Temperaturkompensation vorgesehene Meßeingang mit einem Membran-Druckaufnehmer als Druckmeßgerät 16 verbunden wird und die Eich-Charakteristik der Temperaturkompensation auf die oben angegebene Gleichung für die freie Schaumdichte abgestimmt wird. Bei entsprechender Skaleneichung kann dann am Meßverstärker die freie Schaumdichte $_L$ abgelesen werden. Bei diesem handelsüblichen Gerät werden dessen zur Temperaturkompensation vorhandene Einrichtungen, also zur "Druckkompensation" gemäß der obigen Gleichung eingesetzt.

Beim verwendeten Membran-Druckaufnehmer entspricht dabei ein Eingangsstrom von 0/4 mA einem Druck von 1 kg/qcm. Der üblicherweise zur Temperaturkompensation benützte Stromeingang des Meßverstärkers wird folglich mit einem Drucksignal im Bereich von 0/4 - 20 mA beaufschlagt.

Der somit gewonnene "druckkorrigierte" Ist-Wert der freien Schaumdichte $\rho_L$ wird dann dem Regler 18 vom PID-Typ als Regelgröße zugeführt und dort mit dem Regler 18 einzustellenden Soll-Wert verglichen. Aus dem Differenzsignal wird im Regler 18 die Stellgröße für das Regelventil 12 in der Gasförderleitung 11 gewonnen.

Mit dieser Anordnung lassen sich die Schwankungen der freien Schaumdichte $\Delta\rho_L$ beim oben angegebenen Ausführungsbeispiel auf einen Wert von < +/- 1 g/l beschränken, die

relative Schwankung $\Delta\rho_L/\rho_L$ liegt also lediglich in der Größenordnung von 1 %. Dies ist insbesondere auch dann gegeben, wenn unterschiedliche Förderleistungen erforderlich sind: durch die Regelschleife wird das Regelventil 12 automatisch "nachgefahren", so daß die Schaumdichte $\rho_L$ konstant gehalten wird.

**Patentansprüche**

1. Verfahren zur Steuerung der Dichte eines aus einem flüssigen und einem gasförmigen Stoff in einem Mischer (13) zusammengesetzten Ausgangsprodukts, wobei in der Förderleitung (14) des Ausgangsproduktes dessen Dichte gemessen wird, der Meßwert (Ist-Dichte) mit einem vorgegebenen Dichtewert (Soll-Wert) verglichen wird und bei Abweichungen die Zufuhrmenge des gasförmigen Stoffes nachgeregelt wird, dadurch gekennzeichnet, daß zur Steuerung der Dichte eines Schaumes bei atmosphärischem Druck als Ausgangsprodukt bei dessen Austritt aus der Förderleitung (14) (freie Schaumdichte) zusammen mit dessen Dichte ($\rho_S$) in der Förderleitung (14) an unmittelbar benachbarter Stelle auch der Überdruck ($p_{ü}$) in der Förderleitung (14) gemessen wird, und daß aus diesen beiden Messungen ($\rho_S$, $p_{ü}$) und dem bekannten Wert der Dichte ($\rho_F$) des flüssigen Stoffes mit Hilfe der Beziehung:

$$\rho^*_L = \left[1 - \frac{\rho_F - \rho_S}{\rho_F - \rho_S + \rho_S(p_{ü}+1)}\right] \cdot \rho_F$$

der Ist-Wert ($\rho^*_L$) der freien Schaumdichte ermittelt wird, der mit dem vorgegebenen Wert der Soll-Dichte verglichen und zur Regelung der Gaszufuhr verwendet wird.

2. Vorrichtung zur Dichtesteuerung eines aus einem flüssigen und einem gasförmigen Stoff in einem Mischer (13) zusammengesetzten Ausgangsprodukts, mit einer Flüssigkeitszuleitung (10) und einer Gaszuleitung (11) am Eingang des Mischers (13), mit einer an dessen Ausgang angeschlossenen Förderleitung (14) für das Ausgangsprodukt, mit einem Regelventil (12) in der Gaszuleitung (11) für die Gaszufuhr, mit einer in der Förderleitung (14) angeordneten radiometrischen Dichte-Meßeinrichtung (15) und mit einem Auswertegerät (17), das eingangsseitig mit der Dichte-Meßeinrichtung (15) verbunden ist und ausgangsseitig mit dem Regelventil (12), dadurch gekennzeichnet, daß ein Druckmeßgerät (16) in der Förderleitung (14) unmittelbar neben der Dichte-Meßeinrichtung (15) angeordnet ist, das eingangsseitig ebenfalls mit dem Auswertegerät (17) verbunden ist, und daß das Auswertegerät (17) aus den Signalen des Druckmeßgerätes (16) und der Dichte-Meßeinrichtung (15) die Regelgröße zur Ansteuerung des Regelventils (12) erzeugt.

## Claims

1. Method of controlling the density of a starting product, which is composed of a liquid substance and a gaseous substance in a mixer (13), comprising measuring the density of the starting product in the feed-pipe (14) for the starting product, comparing the measured value (actual density) with a prescribed density value (desired value) and adjusting the quantity of gaseous substance supplied if differences exist, characterised in that, in order to control the density of a foam at atmospheric pressure, which serves as the starting product, as it emerges from the feed-pipe (14) (free foam density) the excess pressure ($p_\ddot{u}$) in the feed-pipe (14) is also measured together with the density ($\rho_s$) of said starting product in the feed-pipe (14) at an immediately adjacent location, and in that the actual value ($\rho_L\cdot$) of the free foam density is determined from these two measurements ($\rho_s$, $p_\ddot{u}$) and the known value of the density ($\rho_F$) of the liquid substance by means of the equation

$$\rho^*_L = [1 - \frac{\rho_F - \rho_S}{\rho_F - \rho_S + \rho_S(P\ddot{u} + 1)}] \cdot \rho_F$$

which actual value is compared with the prescribed value of the desired density and is used to regulate the supply of gas.

2. Apparatus for controlling the density of a starting product, which is composed of a liquid substance and a gaseous substance in a mixer (13), including a liquid feed-pipe (10) and a gas feed-pipe (11) at the inlet of the mixer (13), a feed-pipe (14) which serves to supply the starting product and communicates with the outlet of said mixer, a regulating valve (12) in the gas feed-pipe (11) for the supply of gas, a radiometric density measuring arrangement (15) which is disposed in the feed-pipe (14), and an evaluating device (17) which is connected at its inlet end to the density measuring arrangement (15) and is connected at its outlet end to the regulating valve (12), characterised in that a pressure measuring device (16) is disposed in the feed-pipe (14) immediately adjacent the density measuring arrangement (15), said pressure measuring device also being connected at its inlet end to the evaluating device (17), and in that the evaluating device (17) produces the regulation parameter for actuating the regulating valve (12) on the basis of the signals of the pressure measuring device (16) and the density measuring arrangement (15).

## Revendications

1. Procédé de commande de la densité d'un produit de départ composé dans un mélangeur (13) à partir d'une substance liquide et d'une substance gazeuse, la densité du produit de départ étant mesurée dans la conduite de refoulement (14) dudit produit de départ, la valeur mesurée (densité effective) étant comparée avec une valeur de densité prédéterminée (valeur de consigne, et le réglage de la quantité de substance gazeuse amenée étant corrigé en cas d'écarts, caractérisé en ce que pour la commande de la densité d'une mousse sous pression atmosphérique en tant que produit de départ, la surpression (pü, à l'intérieur de la conduite de refoulement est mesurée, lors de la sortie dudit produit de la conduite de refoulement (14) (densité de mousse libre), conjointement avec sa densité ($\rho_S$) dans la conduite de refoulement (14), à un endroit immédiatement voisin, et que, à partir de ces deux mesures ($\rho_S$, $p_\ddot{u}$) et de la valeur connue de la densité ($\rho_F$) de la substance liquide, la valeur effective ($\rho_L\cdot$) de la densité de mousse libre qui est comparée avec la valeur prédéterminée de la densité théorique est déterminée à l'aide de la relation:

$$\rho^*_L = [1 - \frac{\rho_F - \rho_S}{\rho_F - \rho_S + \rho_S(P\ddot{u} + 1)}] \cdot \rho_F$$

et utilisée pour la régulation de l'arrivée du gaz.

2. Dispositif pour la commande de la densité d'un produit de départ composé à partir d'une substance liquide et d'une substance gazeuse dans un mélangeur (13) comprenant une conduite d'arrivée de liquide (10) et une conduite d'arrivée de gaz (11) à l'entrée du mélangeur (13), une conduite de refoulement (14) pour le produit de départ raccordée à la sortie dudit mélangeur, une soupape de réglage (12) dans la conduite d'arrivée de gaz (11) pour l'amenée de gaz, un dispositif de mesure de densité radiométrique (15) placé dans la conduite de refoulement (14) et un appareil d'interprétation (17) qui est relié, du côté entrée, au dispositif de mesure de densité (15) et, du côté sortie, à la soupape de réglage (12), caractérisé en ce qu'un manomètre (16) est disposé dans la conduite de refoulement (14), immédiatement à côté du dispositif de mesure de densité (15) qui, du côté entrée, est également relié à l'appareil d'interprétation (17), et que l'appareil d'interprétation (17) forme à partir des signaux du manomètre (16) et du dispositif de mesure de densité (15) la grandeur de réglage pour la commande de la soupape de réglage (12).